# EUROPÄISCHE PATENTSCHRIFT

(11) **EP 1 673 536 B1**
(45) Veröffentlichungstag und Bekanntmachung des Hinweises auf die Patenterteilung: **02.05.2007**
(21) Anmeldenummer: 04789928.1
(22) Anmeldetag: 07.10.2004
(51) Int. Cl.: F03D 1/00, E02B 17/00

(54) **OFFSHORE-WINDENERGIEANLAGE MIT EINER GRÜNDUNG**
OFFSHORE WIND ENERGY PLANT COMPRISING A FOUNDATION
EOLIENNE EN MER COMPRENANT UNE FONDATION

(30) Priorität: 17.10.2003 DE 10349109
(43) Veröffentlichungstag der Anmeldung: 28.06.2006
(73) Patentinhaber: Aerodyn Engineering GmbH, 24768 Rendsburg (DE)
(72) Erfinder: SIEGFRIEDSEN, Sönke, 25878 Drage (DE)
(74) Vertreter: Biehl, Christian
(86) Internationale Anmeldenummer: PCT/DE2004/002217
(87) Internationale Veröffentlichungsnummer: WO 2005/040605

(56) Entgegenhaltungen:
- EP-A- 1 174 336
- EP-A- 1 457 674
- WO-A-02/088475
- WO-A-03/080939
- DE-A1- 10 061 916
- DE-C1- 10 109 040
- US-A- 2 784 556
- PERNPEINTNER R: "OFFSHORE SITING OF LARGE WIND ENERGY CONVERTER SYSTEMS IN THE GERMAN NORTH SEA AND BALTIC REGIONS" MODERN POWER SYSTEMS, WILMINGTON PUBLISHING, WILMINGTON, GB, Bd. 4, Nr. 6, Juni 1984 (1984-06), Seiten 33-40, XP001014353 ISSN: 0260-7840
- MORGAN C A ET AL: "FEASIBILITY STUDY FOR A UK DEMONSTRATION OFFSHORE WIND TURBINE" WIND ENGINEERING, MULTI-SCIENCE PUBLISHING CO., BRENTWOOD, ESSEX, GB, Bd. 17, Nr. 3, Januar 1993 (1993-01), Seiten 113-119, XP000417857 ISSN: 0309-524X

## Beschreibung

Die Erfindung betrifft eine Gründung für eine Offshore-Windenergieanlage (WEA) mit einem den Turm der WEA mit Gondel und Rotor tragenden Lastverteilungselement und einer Mehrzahl von das Lastverteilungselement tragenden, gegenüber der Vertikalen schräg nach außen verlaufenden Gründungsbeinen.

Die Entwicklung von .offshoretauglichen Windenergieanlagen hat mit dem Beginn des 21. Jahrhunderts einen starken Aufschwung genommen. Die Anlagen werden dabei für die speziellen Offshore-Bedingungen umkonstruiert und teilweise vollständig neue Lösungen für Teilaufgaben entwickelt. Eines der größten Probleme bei dem Ausbau der Offshore-Windenergienutzung sind die hohen Kosten hauptsächlich für die Gründung der Anlagen und die Netzanbindung an das Land.

Als Gründung kommen verschiedene Konstruktionen zum Einsatz. Im Flachwasserbereich bis ca. 5 - 7 m ist die Verwendung von Senkkastenfundamenten in Betonbaubauweise vorteilhaft. Dabei wird ein im Trockendock vorgefertigter schwimmfähiger Betonhohlkörper an den Standort geschleppt und dann durch eingebrachten Ballast versenkt. Dabei muss der Meeresboden eingeebnet und vorbereitet werden. Die Standfestigkeit dieser Gründungsform wird durch die Schwerkraft des Bauteils erreicht.

Für Wassertiefen zwischen ca. 7 bis 20 m ist der sogenannteMonopile eine kostengünstige Gründungsvariante. Dieser Monopile wird mit einer Ramme am vorgesehenen Standort in den Meeresboden eingetrieben. Die Einbindelängen sind dabei je nach Bodenbeschaffenheit und Anlagengröße bis zu ca. 30 m. Der Monopile besteht aus einem einfachen zylindrischen Rohr, das in den Wandstärken den örtlichen Festigkeitsanforderungen angepasst ist. Diese Standfestigkeit wird bei dieser Gründung durch die Einleitung von Querkräften und Biegemomenten in den Meeresboden erreicht. Die Monopile-Konstruktion ist eine Gründungslösung mit sehr hohem Gewicht, wobei die spezifischen Kosten pro Masse durch die Einfachheit der Konstruktion allerdings gering sind. Bei größerer Wassertiefe und großen Anlagen (z. B. 5 MW) werden die erforderlichen Durchmesser, Blattstärken, Längen und damit das Gesamtgewicht so hoch, dass die Kosten allerdings wieder sehr stark ansteigen. Ein Monopile mit Durchmesser von 5 bis 7 m und Wandstärken bis zu 50 - 70 mm wird dann aus einzelnen vorgebogenen Blechelementen zusammen geschweißt, was einen großen Fertigungsaufwand bedeutet. Die Preise pro Tonne Rohr bewegen sich dann über 1000 EUR/t. Ferner sind die Rammmöglichkeiten stark eingeschränkt.

Für größere Wassertiefen jenseits der 20 m sind daher Tripod- oder Jacket-Fundamente vorgeschlagen worden. Tripod-Fundamente bestehen aus einer aufgelösten Struktur mit drei Beinen, wobei die Lasten aus der Windenergieanlage über jeweils zwei Tragbalken zwischen dem Zentralrohr und dem Beinanschlussteil übertragen werden. Die Beinanschlussteile werden durch je einen Rammpfahl mit dem Meeresboden verbunden, wobei zwischen Rammpfahl und Beinanschlussteilen ein Vergrouten (Verkleben) durchgeführt wird. Der Lasteintrag in den Meeresboden wird dabei auf die drei Rammpfähle verteilt, die im wesentlichen Quer- und Längskräfte aufnehmen müssen.

Diese Konstruktionslösung ist dadurch charakterisiert, dass relativ große Rohrdurchmesser miteinander verschnitten und verschweißt werden müssen. Dieses ist nicht nur sehr kostenintensiv, sondern auch sehr fehleranfällig und damit sehr ungeeignet für hohe dynamische Belastungen, da die Kerbeinwirkungen sehr hoch sind. Da Windenergieanlagen Maschinen mit sehr hohen dynamischen Lasten bei gleichzeitig hohen Lastwechselzahlen darstellen,'müssen die Knotenpunkte mit deren Verschweißungen extrem stark dimensioniert werden und mit hohem Aufwand auf die Schweißgüte hin geprüft werden. Ferner sind auch laufend wiederkehrende Prüfungen an den Knoten vorzunehmen. Der Ersatz der Schweißverbindungen durch Gussteile ist auch untersucht worden. Dabei müssen dann bei einem Tripod fünf Knotenpunkte mit zehn Rohren verbunden werden. Die Tripodlösung mit drei Beinen kann bei größeren Anlagen mit höheren Lasten auch auf eine Ausführung mit mehr als drei Beinen übertragen werden. Der Aufwand für die weiteren Knotenverbindungen steigt dabei entsprechend an.

Bei dem Jacket-Fundament wird das Gründungsteil quasi als Gitterstruktur aus Rohren mit relativ geringen Abmessungen aufgebaut. Diese Rohre sind auf Grund der Durchmesser relativ kostengünstig, da diese industriell und fast vollautomatisch produziert werden können. Die Rohrpreise für Durchmesser unterhalb von ca. 2,0 - 2,2 m sind unter 800 EUR/t. Doch die Vielzahl der Verschweißungen macht die Fertigung sehr teuer und erhöht den Aufwand für diese Qualitätssicherung gegenüber der Tripodlösung noch weiter. Ein Jacket-Fundament wird üblicher Weise mit vier annähernd senkrechten Tragrohren ausgeführt, die mit dem Meersboden über Rammpfähle verbunden werden. Auf Grund der vielen Rohrverschneidungen, die wieder verschweißt werden müssen, ergeben sich bezüglich der dynamischen Belastungen sehr hohe Kerbfaktoren, die bei der Auslegung berücksichtigt werden müssen. Dieses führt zu einer schlechten Materialausnutzung und damit zu schweren und kostenintensiven Bauteilen.

Alternativ zu den Rammpfählen können auch sogenannte suction backets (Saugnäpfe) zur Befestigung am Meeresboden verwendet werden. Dabei wird in einem nach unten offenen Hohlkörper ein Unterdruck erzeugt, der die Gründung am Boden festsaugt und damit die Standfestigkeit erzeugt.

Alle diese Konstruktionen sind aus der Offshore-Ölindustrie abgeleitet worden, wo die Kostensituation nicht im Vordergrund steht, die Gründung keine hohen dynamischen Belastungen ertragen müssen und keine Serienproduktionsanforderungen gestellt werden. Die Situation bei der Offshore-Windenergienutzung ist in allen drei Punkten konträr. Die Kostensituation ist für die Auslegung der Designdriver, die dynamischen Belastungen sind extrem hoch und die Konstruktion ist in serientauglicher Ausführung zu gestalten.

DE 10 061 916 bzw. DE 10 109 040 offenbaren jeweils eine Offshore-Windenergieanlage gemäß dem Oberbegriff des Anspruchs 1.

Ziel der Erfindung ist es daher, eine Gründung für Offshore-Windenergieanlagen zu schaffen, die aus kostengünstig zu fertigenden Rohren mit relativ kleinem Durchmesser aufgebaut ist, über eine möglichst kleine Anzahl von Knotenelementen (vorzugsweise ein Knotenelement) verfügt und konstruktions- und ausführungsbedingt nur geringe Kerbfaktoren mit einer guten Materialausnutzung aufweist.

Erfindungsgemäß wird diese Aufgabe durch die Merkmale des Kennzeichnenden Teils des Anspruchs 1 gelöst, die Unteransprüche geben vorteilhafte Ausgestaltungen an.

Durch die erfindungsgemäße Ausgestaltungen wird sichergestellt, dass die Last des Turms im wesentlichen vertikal durch das Lastverteilungselement hindurch in die Gründungsbeine eingeleitet wird.

Die o. g. Auslegungskriterien werden optimal dadurch erreicht, dass der Turm der Windenergieanlage, der die Lasten der den Rotor tragenden Gondel aufnimmt, von einem Lastverteilungselement getragen wird, an das eine Vielzahl (mindestens drei) von vorzugsweise zylindrischen Gründungsbeinen angeschlossen wird. Das Lastverteilungselement verteilt die Lasten auf die einzelnen Gründungsbeine, die in einen gegenüber der Vertikalen nach außen geneigten Winkel angeordnet sind. Das Lastverteilungselement ist dabei als möglichst biegesteife Struktur auszubilden, damit die Gründungsbeine weitestgehend nur Druck- oder Zugkräfte aufnehmen müssen. Dieses Lastverteilungselement kann dabei als geometrisch optimiertes Gussbauteil mit geringen Kerbfaktoren ausgelegt werden. Die Gründungsbeine können aus Rohren mit kleinem Durchmesser industriell und kostengünstig hergestellt werden. Die Verbindung zwischen dem Lastverteilungselement und den Gründungsbeinen ist vorzugsweise durch Schraubverbindungen hergestellt. Eine Schweißausführung mit einer entsprechenden Anschlussausbildung ist aber ebenfalls denkbar.

Der Spreizungswinkel in dem die Gründungsbeine gegenüber der Senkrechten angebracht werden, beträgt sinnvoller Weise zwischen 5° bis zu 30°. Damit kann die Gründung auch hohe Horizontallasten in den Meersboden abtragen. Die Anzahl der Gründungsbeine können je nach Belastung und Wassertiefe gewählt werden, wobei drei Beine ein Minimum darstellen. Auf Grund der geometrischen Verhältnisse zwischen erforderlichem Turmdurchmesser und kostengünstigem Rohrdurchmesser für die Gründungsbeine ist eine Gründungsbeinanzahl von fünf bis acht besonders sinnvoll. Das untere Ende der Gründungsbeine steht auf dem Meeresboden, wobei über die Anbringung von entsprechend dimensionierten Gründungsplatten ein Absinken in den Meeresboden weitestgehend vermieden wird. In den Gründungsrohren können als eine Variante die Rammrohre für den Transport untergebracht werden. Die gesamte Gründung wird im Herstellungshafen zusammengebaut und in einem Stück an den Standort verbracht.

Nach dem Absetzen der Gründung am vorgesehenen Standort können die Rammrohre mit der in den Gründungsbeinen geführten Ramme so tief in den Meeresboden verbracht werden, dass die erforderliche Einrammlänge erreicht wird. Dadurch wird die Einbindung der Gründung in den Meeresboden erreicht.

Bevor die dauerhafte Verbindung zwischen den Gründungsbeinen und den Rammrohren hergestellt wird, kann die gesamte Struktur mit ihrem Befestigungsflansch an der Oberseite des Lastverteilungselements horizontal ausgerichtet werden, damit der später aufgesetzte Turm annähernd senkrecht stehen wird. Dieses Ausrichten kann durch geeignete Verstellelemente zwischen den Gründungsbeinen und den Rammrohren bewerkstelligt werden.

Die Lasten der WEA werden über die schräggestellten Gründungsbeine und die in dieser Verlängerung stehenden Rammrohre in den Meersboden im wesentlichen als Zug/Druck-Kräfte in den Meeresboden eingeleitet.

Die hier vorgeschlagene Ausbildung der Gründung hat die erheblichen Vorteile, dass zum einen nur ein Knotenelement zur Lastverteilung vorhanden ist, das als Gussteil dem Kraftfluss entsprechend und gewichtsoptimal aufgeführt werden kann und zum anderen handelsübliche und damit kostengünstige zylindrische Rohre mit relativ geringen Durchmesser als Gründungsbeine eingesetzt werden können, die über ihre ganze Länge strukturell nicht gestört sind.

Das Lastverteilungselement wird sinnvoller Weise oberhalb der Wasseroberfläche höher als die maximale Wellenhöhe angeordnet. Damit können an dieser Struktur auch evtl. erforderliche Container zur Aufnahme von Subsystemen der Windenergieanlage angebracht werden. Ferner können auch die Rammarbeiten für die Rammpfähle von dieser Struktur aus durchgeführt werden, ohne dass ein Versorgungs- oder Begleitschiff erforderlich ist. Alle notwendigen Werkzeuge und Hilfsmittel können auf oder an dem Lastverteilungselement aufbewahrt oder befestigt werden. Für die Zeit der Durchführung der Rammarbeiten kann das Lastverteilungselement mit einem Abdeckelement vor Witterungseinflüssen geschützt werden.

Zur Durchführung der Rammarbeiten ist die Ramme mit Führungselementen auszurüsten, die die Ramme innen im Gründungsbein sicher führt und ein ausgerichtetes Herablassen im Gründungsbein bis zum Rammpfahl ermöglicht. Während des Rammvorganges wird die Ramme ebenfalls über ihre Führungselemente im Gründungsbein geführt. Auch die Rammrohre werden über Führungselemente weitestgehend in der Achse der Gründungsbeine geführt. Dabei sind Führungselemente am unteren Ende der Gründungsbeine und am oberen Ende der Rammrohre besonders vorteilhaft. Nach dem Rammen der Rohre wird mit Hilfe geeigneter Verklebemasse eine feste Verbindung zwischen Rammrohr und Gründungsbein hergestellt. Dabei wird der Verkleberaum nach unten hin mit einer aufblasbaren Gummimanschette gegenüber dem Meerwasser abgedichtet und über ein Rohr die Verklebemasse von unten dem Verklebebereich zugeführt. Dieser härtet dort aus und ergibt eine feste Verbindung der beiden Elemente.

Nach dem Aushärten der Verklebung (Vergroutung) zwischen den Gründungsbeinen und den jeweiligen Rammrohren wird die WEA durch ein geeignetes Montageschiff angeliefert. Dieses Schiff übernimmt zunächst die auf dem Lastverteilungselement angebrachte Rammvorrichtung und stellt danach die WEA mit Turm auf dem Lastverteilungselement ab, mit der der Turm verschraubt wird.

Sollte die Wassertiefe so groß werden, dass die Gründungsbeine knick- oder beulgefährdet werden, können horizontale Verbindungsrohre, die mit den Gründungsbeinen verbunden sind, die Knicklängen erheblich reduzieren. Diese Verbindungsrohre müssen nicht mit aufwendigen Knotenelementen eingebunden werden, sondern können über Klemmelemente von außen mit den Gründungsbeinen verbunden werden.

Alternativ zu der Befestigung der Gründung mit Hilfe der Rammrohre kann dies bei geeigneten Bodenverhältnissen auch mit sogenannte suction buckets geschehen. Dafür werden an den unteren Enden der Gründungsbeine nach unten offene Hohlkörper angebracht. Nach dem Absetzen der Gründung auf den Meeresgrund wird der Hohlraum mit einem Unterdruck beaufschlagt, so dass sich der Hohlkörper in den Meeresboden hineindrückt. Durch die Druckdifferenz zwischen dem Wasserdruck in Meeresgrundhöhe und dem Innendruck in dem Hohlkörper wird eine Haltekraft an jedem Hohlkörper erreicht, wodurch die Standfestigkeit des Bauwerkes erreicht wird.

Bei entsprechender Dimensionierung der Hohlkörper kann durch das Ausblasen des Wassers aus den Hohlkörper durch Druckluft die Schwimmfähigkeit der gesamten Gründungs erreicht werden. Dieses kann für den einfachen Transport vom Herstellungshafen an den Standort mit Hilfe eines Schleppers genutzt werden. Auf dem Lastverteilungselement ist dafür eine geeignete Druckluftpumpe mit einem Verteilerblock mit Ventilen vorhanden. Für das spätere Festsaugen am Standort befindet sich auf dem Lastverteilungselement ebenfalls eine Vakuumpumpe, die über das gleiche Verteilersystem arbeiten kann. Über die Steuerung der Unterdrücke in den Hohlkörper einzelner Gründungsbeine kann die gesamte Gründung ausgerichtet werden, so dass der Befestigungsflansch des Lastverteilungselements für den Turm in eine annähernd horizontale Position gebracht wird.

Ein großer Vorteil dieses Befestigungsverfahrens ergibt sich daraus, dass die Gründung nach dem Erreichen der Lebensdauer bzw. dem Erlöschen der Betriebsgenehmigung leicht wieder zu entfernen ist, indem die Hohlkörper mit Druckluft beaufschlagt werden, wodurch die gesamte Gründung sich wieder aus dem Meeresboden löst und zur Entsorgung wieder schwimmfähig wird.

Ein weiterer Vorteil der suction buckets gegenüber der Befestigung mit Rammpfählen ist die geringe Geräuschbelästigung für die Meeresbewohner während des Befestigungsvorgangs.

Der Zugang für die Offshore-WEA ist von unten durch eine Durchstiegsöffnung in dem Lastverteilungselement vorgesehen. Mit einem kleinen Wartungsschiff ist es möglich zwischen den Gründungsbeinen hindurch in den Innenteil der Gründung zu kommen. Zwischen diesen Rohren kann das Wartungsschiff eine sichere Position einnehmen, um von dort das Wartungspersonal auf die Windenergieanlage übersteigen zu lassen. Als weitere Variante besteht die Möglichkeit in die Gründung einen Hebemechanismus zu integrieren, der das innerhalb der Gründungsbeine befindliche Wartungsschiff anhebt und damit aus dem Bereich der Wellen heraushebt. Diese Vorrichtung ermöglicht einen gefahrlosen Zugang zur WEA durch den Einstieg von unten in das Lastverteilungselement.

Weitere Vorteile und Merkmale der Erfindung werden im folgenden anhand der beigefügten Zeichnung erläutert. Dabei zeigt:
- Fig. 1: die fertig installiert Windenergieanlage am Offshore-Standort,
- Fig. 2: die schwimmende Gründung gezogen von einem Schlepper,
- Fig. 3: den Rammvorgang am Offshore-Standort,
- Fig. 4: die Verbindung der Gründungsbeine untereinander,
- Fig. 5: das Gründung mit suction buckets,
- Fig. 6: die Errichtung der WEA auf der Gründung,
- Fig. 7: das Wartungsschiff zwischen den Gründungsbeinen und
- Fig. 8: den Hubvorgang für das Wartungsschiff.
- Fig. 9: das Lastverteilungselement in einer perspektivischen Ansicht, und
- Fig. 10: eine die Verschraubung zwischen Turm, Lastverteilungselement und Gründungsbeinen zeigende Schnittansicht.

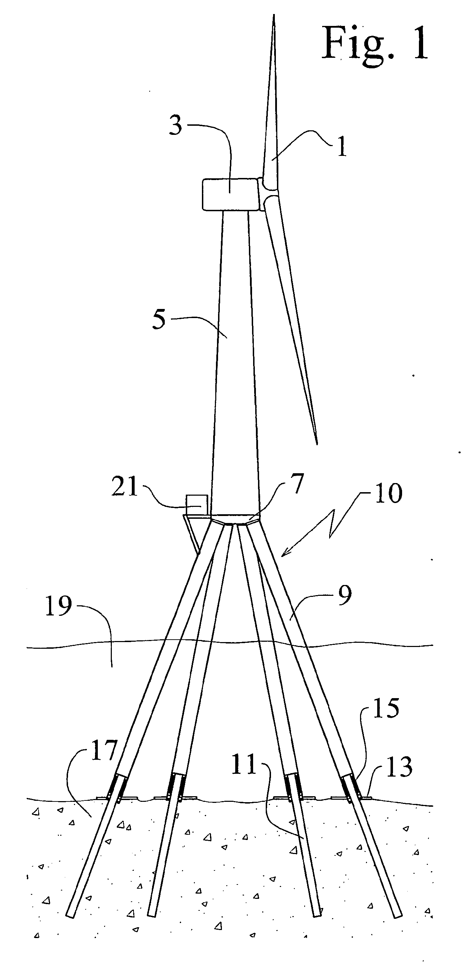

Die in der Fig. 1 dargestellte, fertig installierte Offshore-Windenergieanlage besteht aus einem Rotor 1, der die Energie des Windes in einer nutzbare Energieform umwandelt. In der Gondel 3 der Anlage sind die dafür erforderlichen Elemente und Bauteile untergebracht. Diese Gondel 3 ist über eine Drehverbindung mit dem Turm 5 verbunden. Der Turm 5 hat an seinem unteren Ende einen Flansch. Über geeignete Verbindungselemente ist der Turm 5 mit dem Lastverteilungselement 7 verbunden. Mit dem Lastverteilungselement 7 sind eine Vielzahl von Gründungsbeinen 9 in einem flachen Winkel von 5° bis 30° gegenüber der Senkrechten verbunden. Die Gründungsbeine 9 werden über Rammrohre 11, die in den Meeresboden 17 eingebracht worden sind, verbunden. An den unteren Enden der Gründungsbeine sind Fußplatten 13 angebracht, um ein Einsinken der Struktur in den Meeresboden 17 zu vermindern. Zwischen den Gründungsbeinen 9 und den Rammrohren 11 ist eine Verklebung 15 mit einem geeigneten Material, beispielsweise Beton, vorgesehen. Die Gründung 10 mit seinen Gründungsbeinen 9 ist von der Bauhöhe so dimensioniert, dass die größte anzunehmende Welle 19 das Lastverteilungselement 7 nicht erreicht. An das Lastverteilungselement 7 können weiterhin Container 21 zur Aufnahme von Subsystemen wie Schaltanlage, Wechselrichter usw. befestigt werden.

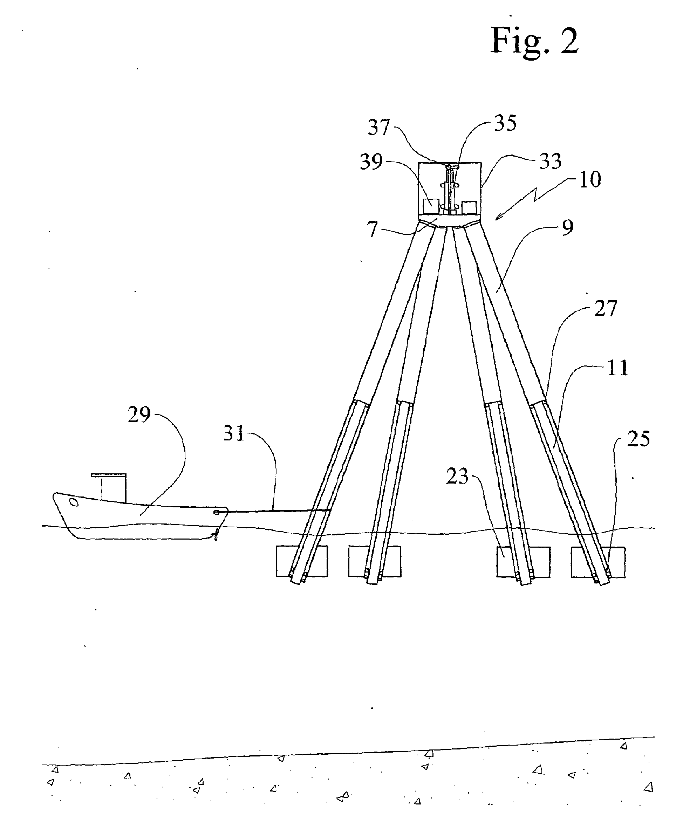

Fig. 2 zeigt den Schleppvorgang einer schwimmenden Gründung 10. In diesem Zustand sind die Rammpfähle 11 in den Gründungsbeinen 9 noch eingefahren und werden über die Führungselemente 25 und 27 fixiert. Am unteren Ende der Gründungsbeine befinden sich Auftriebstanks 23, die mit Luft gefüllt sind und damit die Schwimmfähigkeit der gesamten Struktur bewirken. Der Schlepper 29 ist über das Schleppseil 31 mit der Gründung 10 verbunden und schleppt das Teil an den vorgesehen Standort. Dabei ist über dem Lastverteilungselement 7 ein Schutzhaus 33 angebracht, in dem die Ramme 35 und die erforderlichen Hilfsaggregate 39 untergebracht sind. Die Ramme 35 ist beweglich an der Rammenführung 37 befestigt, um den späteren Rammvorgang zu ermöglichen.

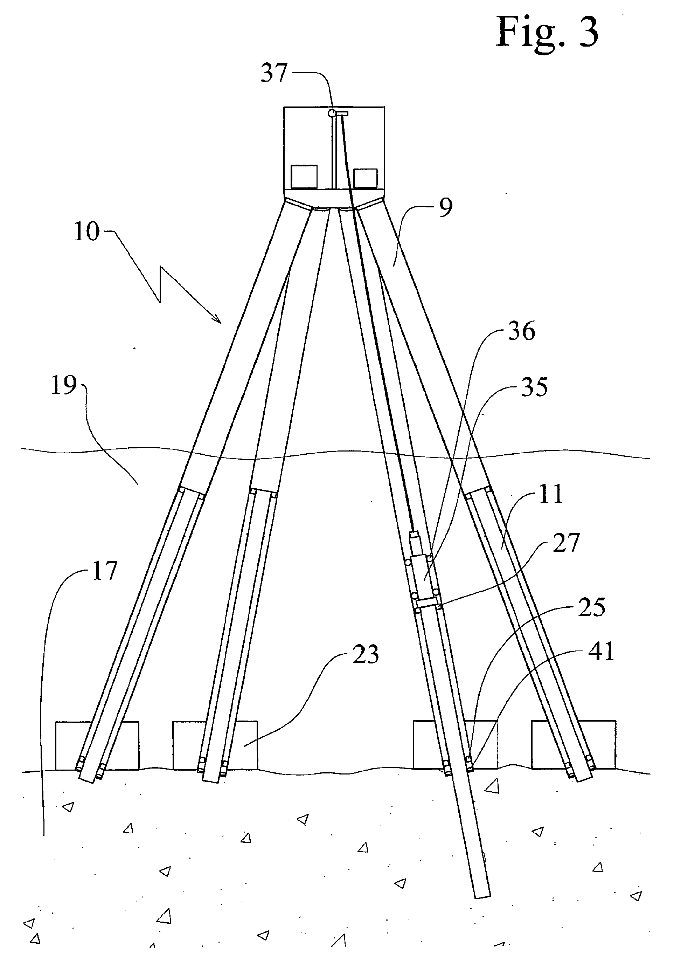

Fig. 3 zeigt den Rammvorgang am Offshore-Standort. Dort werden zunächst die Auftriebstanks 23 geflutet und die Gründung 10 auf den vorgesehenen Standort auf dem Meeresboden 17 abgesenkt. Danach werden die Rammpfähle 11 nacheinander mit der Ramme 35 in den Meeresboden 17 getrieben. Das Rammrohr 11 wird dabei über die obere Führung 27, die am Rammrohr 11 befestigt ist, und die untere Führung 25, die im Gründungsbein 9 befestigt ist, im Gründungsbein 9 geführt. Die Ramme 35 selbst ist ebenfalls über Führungselemente 36 in den Gründungsbeinen 9 zentrisch geführt. Am unteren Ende des Gründungsbeines 9 ist eine aufblasbare Manschette 41 vorhanden, die den Hohlraum im Gründungsbein gegenüber dem Meerwasser 19 abschließt. Mit Hilfe der Rammenführung 37 kann die Ramme 35 nach einer Rammung wieder aus dem jeweiligen Gründungsbein 9 nach oben gezogen werden und in das nächste Gründungsbein 9 bis zum Rammpfahl 11 herabgelassen werden.

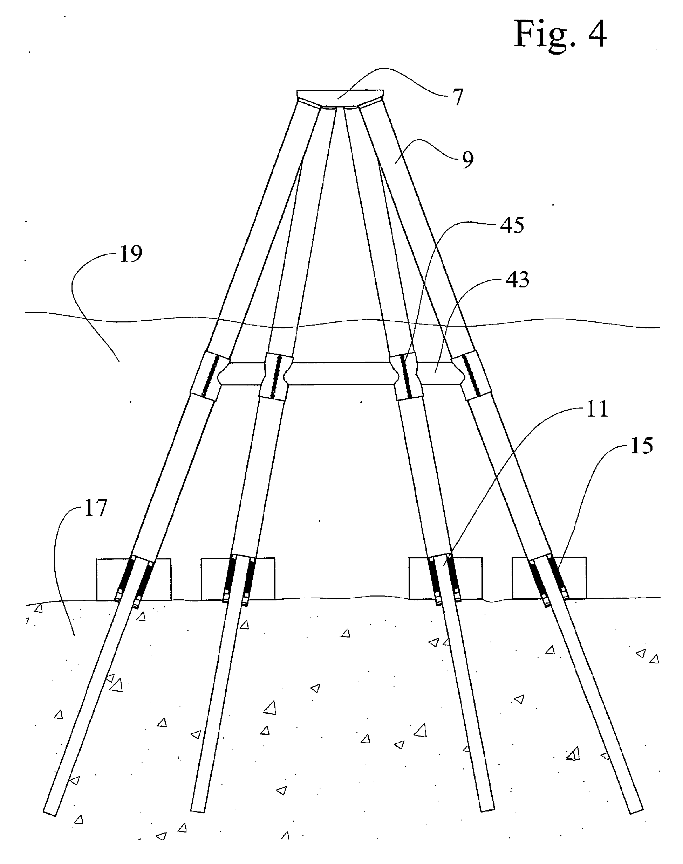

Fig. 4 zeigt eine Gründung für sehr große Wassertiefen 19, wo sich große Knicklängen für die Gründungsbeine 9 ergeben. Über die Einspannung der Gründungsbeine 9 an dem Lastverteilungselement 7 und den Rammpfählen 11, die über die Verklebung 15 mit dem Meeresboden 17 verbunden sind, ergibt sich die Knicklänge der Gründungsbeine 9. Sollte es mit den preisgünstigen Rohren bis ca. 2,2 m Durchmesser nicht mehr möglich sein, diese Bauelemente knicksicher nachweisen zu können, ist es möglich, zwischen dem Lastverteilungselement 7 und dem Meeresboden 17 sich zwischen den Gründungsbeinen 9 horizontal erstreckende Versteifungsrohre 43 einzubauen. Diese Versteifungsrohre 43 werden dabei vorzugsweise über Klemmelemente 45 mit den Gründungsbeinen 9 kraftschlüssig von außen verbunden. Diese horizontale Verbindung der Gründungsbeine 9 untereinander vermindert die Knicklänge deutlich.

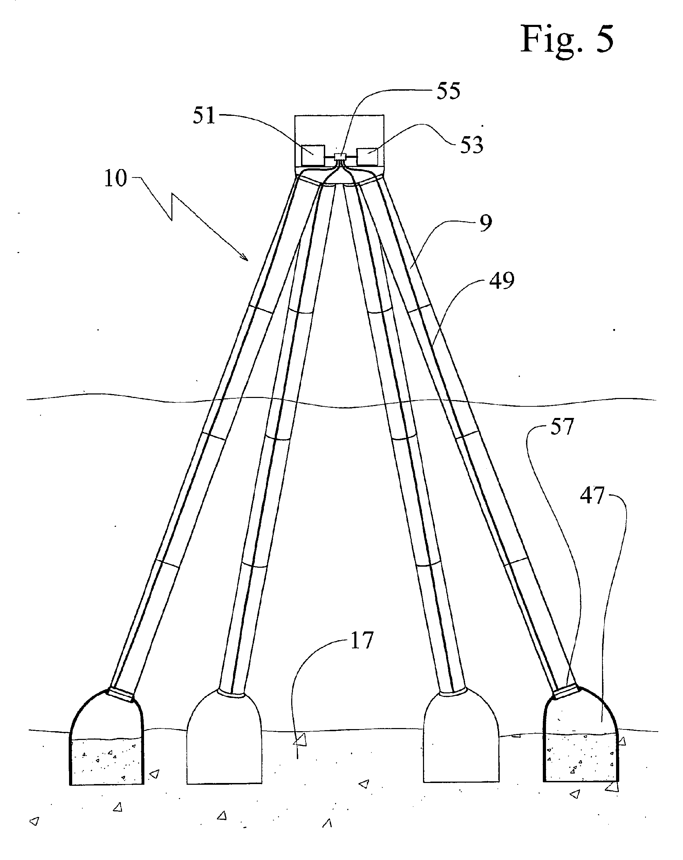

Fig. 5 zeigt eine Variante mit sogenannten suction buckets. Dabei sind an den Enden der Gründungsbeine 9 nach unten offene Hohlkörper oder Saugnäpfe 47 angebracht oder sind integraler Bestandteil der Gründungsbeine 9. Diese Saugnäpfe 47 können für den Schwimmvorgang vom Wasser befreit und mit Luft gefüllt werden. Dies geschieht über eine Druckluftpumpe 51, die die Luft über die Verbindungsleitung 49 in die Saugnäpfe 47 befördert. Ein Auftreiben entsteht, die Gründung 10 ist schwimmfähig. Am Offshore-Standort wird die Luft über dem Verteilerblock 55 abgelassen und das Bauteil abgesenkt. Danach wird über die Vakuumpumpe 53 ein Unterdruck in den Saugnäpfen 47 erzeugt, der die Saugnäpfe 47 in den Meeresboden 17 einbringt und für die Standfestigkeit der Gründung 10 sorgt. Der Druckraum kann dabei durch die Schottwand 57 begrenzt sein oder auch vollständig die Gründungsbeine 9 mit einbeziehen.

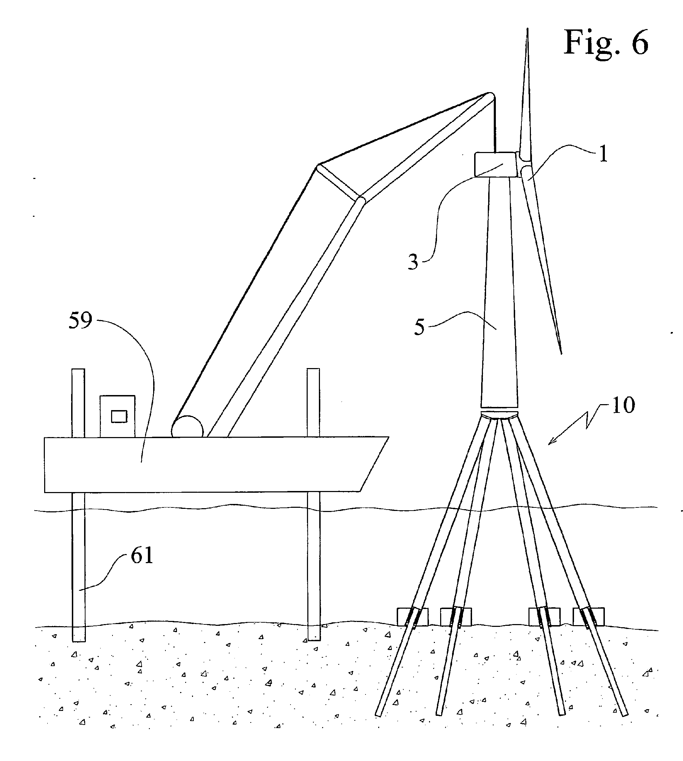

Fig. 6 zeigt die Errichtung der WEA bestehend aus Turm 5, Gondel 3 und Rotor 1 auf der Gründung 10. Dabei hebt eine Jack-up-barge 59 die über ihre Standpfähle 61 auf dem Meeresboden steht die WEA auf der Gründung 10. Der Turm 5 wird dann durch geeignete Verbindungselemente mit der Gründung 10 verbunden. Vorzugsweise werden dafür Schrauben mit dazugehörigen Muttern und Unterlegscheiben verwendet.

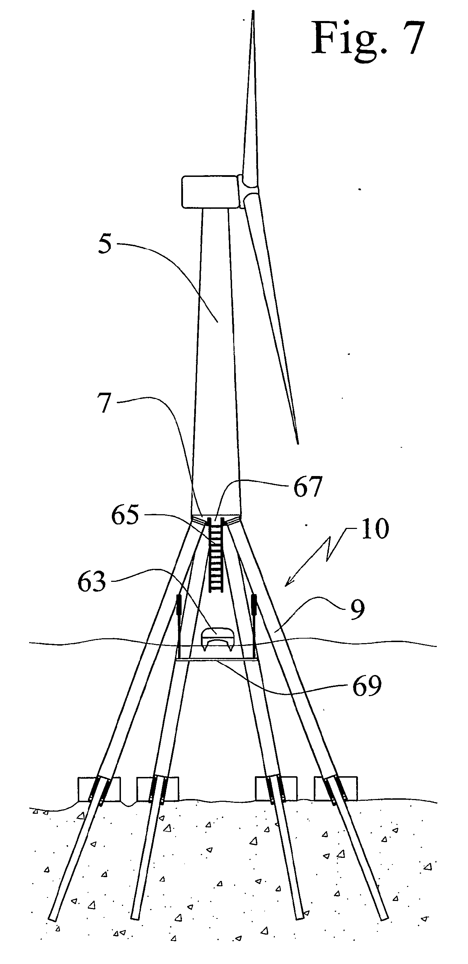

Fig. 7 zeigt ein kleines Wartungsschiff 63, das Personal für Wartungs- oder Instandhaltungsarbeiten auf die Anlage absetzen soll. Dafür fährt das Wartungsschiff 63 zwischen die Gründungsbeine 9 der Gründung 10. Bei genügend ruhiger See kann das Personal über die Einstiegsleiter 65 und das Durchstiegsloch 67 des Lastverteilungselements 7 den Turm 5 der WEA erreichen, um die erforderlichen Arbeiten durchführen zu können.

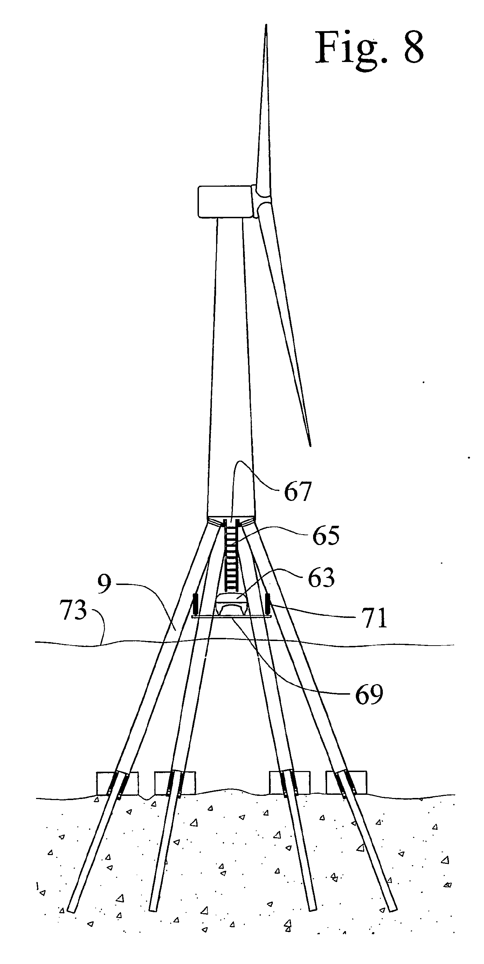

Fig. 8 zeigt, wie das Wartungsschiff 63 über eine Hubplattform 69 bei stärkerem Seegang oder für längere Aufenthalte aus dem Wasser gehoben wird. Dabei wird die Hubplattform 69 über Hubelemente 71 an den Gründungsbeinen 9 oder dem Lastverteilungselement 7 oberhalb der Wasseroberfläche 73 bewegt. Dadurch kommt das Wartungsschiff 63 in eine feste Position, so dass das Wartungspersonal gefahrlos über die Einstiegsleiter 65 und das Durchstiegsloch 67 in die WEA gelangen kann. Nach Beendigung der Wartungs- oder Instandhaltungsarbeiten kann die Hubplattform 69 wieder abgesenkt werden bis das Wartungsschiff 63 wieder schwimmt und sich von der WEA wegbewegen kann.

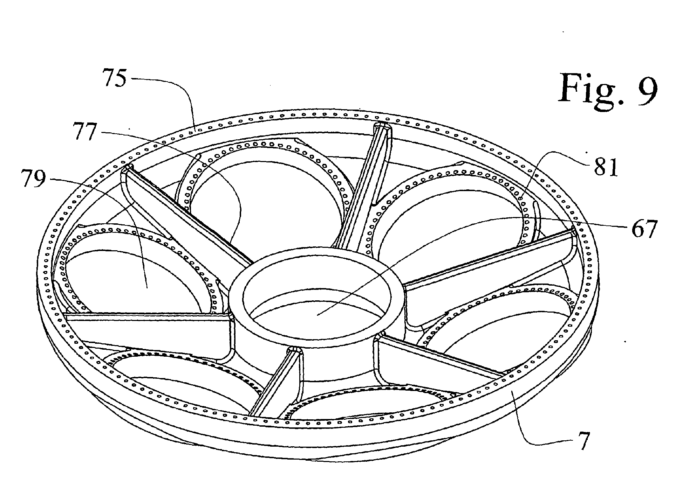

Fig. 9 zeigt das Lastverteilungselement 7, das als Gussteil aus einem metallischen Werkstoff, vorzugsweise als Stahlgussteil ausgebildet ist. Dabei wird der obere Flansch 75 mit dem unteren Turmflansch verbunden. In der Mitte des Lastverteilungselementes 7 ist das Durchstiegsloch 67 vorgesehen. Um dieses Durchstiegsloch 67 herum sind kreisförmig die Gründungsbeinöffnungen 79 angeordnet. Durch diese Öffnungen kann die Ramme für das Eintreiben der Rammrohre in die Gründungsbeine eingeführt werden. Zur Versteifung des Bauteils sind zwischen den Gründungsbeinöffnungen 79 Stege 77 vorgesehen. Zur Herstellung der Schraubverbindungen zwischen dem Lastübertragungselement 7 und den Gründungsbeinen sind Bohrungen 81 kreisförmig um die Gründungsbeinöffnungen 79 in dem Lastübertragungselement 7 angeordnet.

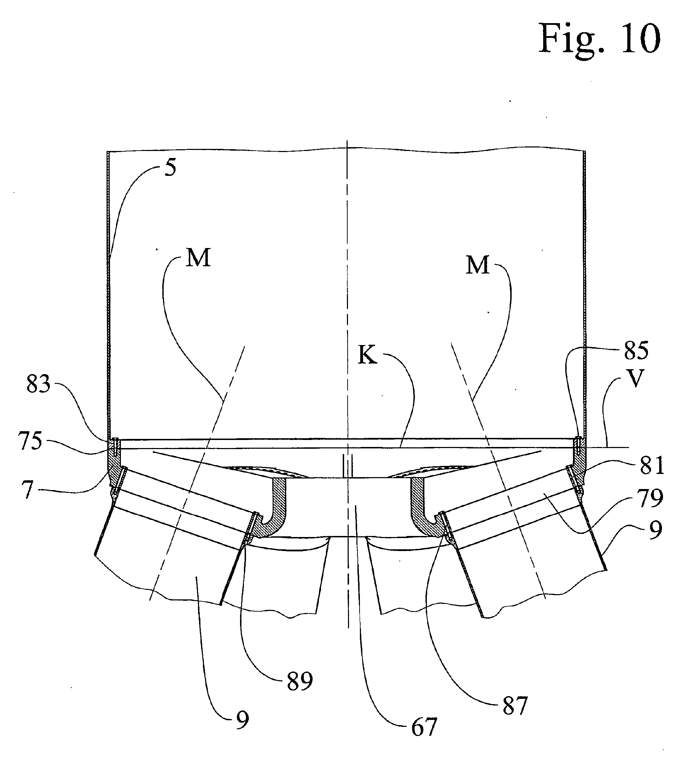

Fig. 10 zeigt die Verbindung der Bauteile Turm 5, Lastverteilungselement 7 und den Gründungsbeinen 9 miteinander. Dabei wird der untere Turmflansch 83 mit dem oberen Flansch 75 des Lastverteilungselementes 7 mit Hilfe einer Vielzahl von Schrauben 85 verbunden. Die Gründungsbeine 9 weisen an ihrem oberen Ende einen Flansch 89 auf, der mit Sacklochinnengewinden versehen ist. Mit Hilfe einer Vielzahl von Befestigungsschrauben 87, die durch die Bohrungen 81 geführt werden, werden die Gründungsbeine 9 mit dem Lastverteilungselement 7 verschraubt. Die Innendurchmesser der Flansche 89 sind bei dem gezeigten Ausführungsbeispiel in der gleichen Abmessung ausgeführt wie der Innendurchmesser der Gründungsbeine. Wenn auch noch der Bohrungsdurchmessser der Gründungsbeinöffnungen 79 in der gleichen Abmessung ausgeführt wird, erhält man eine glatte Innenfläche ohne Absätze. Die Ramme kann dann einfach in die Gründungsbeine eingeführt werden.

In Fig. 10 ist weiter die Lage der Mittelachsen M der Gründungsbeine 9 zu erkennen, die die umschriebene Kreisfläche K des Außendurchmessers des Turmes 5 in der Verbindungsebene V zwischen Turm 5 und Lastverteilungselement 7 schneiden.

## Patentansprüche

1. Offshore-Windenergieanlage (WEA), mit einem den Turm (5) der WEA tragenden Lastverteilungselement (7) und einer Mehrzahl von das Lastverteilungselement (7) tragenden, gegenüber der Vertikalen schräg nach außen verlaufenden Gründungsbeinen (9), wobei des Lastverteilungselement (7) mit einem oberen Flansch (75) zur Schraubverbindung des Lastverteilungselements (7) mit einem unteren Turmflansch versehen ist, **dadurch gekennzeichnet, dass**
das Lastverteilungselement (7) ein Gussteil aus einem metallischen Gusswerkstoff; darstellt und mit um ein mittiges, einen Zugang zu dem Inneren des Turms (5) erlaubendes, Durchstiegsloch (67) kreisförmig angeordneten Gründungsbeinöffnungen versehen (79) ist,
wobei die Gründungsbeinöffnungen (79) mit um diese kreisförmig angeordneten Bohrungen (81) zur Schraubverbindung des Lastverteilungselements (7) mit oberen Flanschen (89) der Gründungsbeine (9) versehen sind, und
die Gründungsbeine (9) in einem Winkel zwischen 5° und 30° zur Senkrechten nach außen verlaufen.

2. Offshore-Windenergieanlage nach Anspruch 1, **dadurch gekennzeichnet, dass** sechs Gründungsbeine (9) vorgesehen sind.

3. Offshore-Windenergieanlage nach einem der vorangehenden Ansprüche, **dadurch gekennzeichnet, dass** die Gründungsbeine (9) miteinander durch sich horizontal erstreckende Versteifungsrohre (43) verbunden sind.

4. Offshore-Windenergieanlage nach einem der vorangehenden Ansprüche, **dadurch gekennzeichnet, dass** die Gründungsbeine (9) als Führung für in den Meeresboden (17) einzurammende Rammrohre (11) ausgebildet sind.

5. Offshore-Windenergieanlage nach Anspruch 4, **dadurch gekennzeichnet, dass** die Gründungsbeine (9) mit auf dem Meeresboden aufliegenden Fußplatten (13) versehen sind.

6. Offshore-Windenergieanlage nach einem der Ansprüche 1 bis 4, **dadurch gekennzeichnet, dass** die Gründungsbeine (9) mit auf den Meeresboden wirkenden Saugnäpfen (47) versehen ist.

7. Offshore-Windenergieanlage nach einem der vorangehenden Ansprüche, **dadurch gekennzeichnet, dass** den schwimmenden Transport der vormontierten Gründung (10) erlaubende Schwimmkörper vorgesehen sind.

8. Offshore-Windenergieanlage nach einem der vorangehenden Ansprüche, **dadurch gekennzeichnet, dass** das Lastverteilelement (7) oberhalb der höchsten anzunehmenden Meereswellen angeordnet ist.

9. Offshore-Windenergieanlage nach einem der vorangehenden Ansprüche, **gekennzeichnet durch** eine an dem Lastverteilungselement (7) oder im oberen Bereich der Gründungsbeine (9) angebrachte, auf eine Hubplattform (69) wirkende Hubeinrichtung (71).

## Claims

1. Offshore wind power plant (WPP), having a load distribution element (7) carrying the WPP tower (5) and a plurality of foundation legs (9) sloping outwards with respect to the vertical and carrying the load distribution element (7), wherein the load distribution element is provided with an upper flange (75) for screwing the load distribution element (7) to a lower tower flange, **characterized in that**
the load distribution element (7) is a cast component out of a metallic cast material, and is provided with foundation leg openings (79) arranged in circular manner around a central climb-through opening (67) allowing access to the interior of tower (5),
wherein the foundation leg openings (79) are provided with holes (81) arranged in circular manner around them for screw joining the load distribution element (7) with the upper flanges (89) of the foundation legs (9), and
the foundation legs (9) pass outwards at an angle between 5 and 30° to the perpendicular.

2. Foundation according to claim 1, **characterized in that** there are six foundation legs (9).

3. Offshore wind power plant according to one of the preceding claims, **characterized in that** the foundation legs (9) are interconnected by horizontally extending stiffening pipes (43).

4. Offshore wind power plant according to one of the preceding claims, **characterized in that** the foundation legs (9) are constructed as a guide for driven piles (11) to be driven into the ocean floor (17).

5. Offshore wind power plant according to claim 7, **characterized in that** the foundation legs (9) are provided with base plates (13) resting on the ocean floor.

6. Offshore wind power plant according to one of the claims 1 to 6, **characterized in that** the foundation legs (9) are provided with suction buckets (47) acting on the ocean floor.

7. Offshore wind power plant according to one of the preceding claims, **characterized in that** floats allowing the floating transportation of the preassembled foundation (10) are provided.

8. Offshore wind power plant according to one of the preceding claims, **characterized in that** the load distribution element (7) is located above the highest expected wave.

9. Offshore wind power plant according to one of the preceding claims, **characterized by** a lifting mechanism (71) acting on a lifting platform (69) fitted to the load distribution element (7) or in the upper area of the foundation legs (9).

## Revendications

1. Eolienne en mer comprenant un élément de répartition de charge (7) portant la tour (5) de l'éolienne et une pluralité de jambes de fondation (9) portant l'élément de répartition de charge (7) et s'étendant obliquement vers l'extérieur par rapport à la verticale, l'élément de répartition de charge (7) étant pourvu d'une bride supérieure (75) pour l'assemblage par vis de l'élément de répartition de charge (7) avec une bride de tour inférieure,
**caractérisée en ce que** l'élément de répartition de charge (7) est constitué d'une pièce moulée dans un matériau de moulage métallique et pourvu d'ouvertures de jambes de fondation (79) disposées en cercle autour d'un trou de passage (67) central permettant un accès à l'intérieur de la tour (5),
les ouvertures de jambes de fondation (79) étant pourvues de perçages (81) disposés en cercle autour de celles-ci pour l'assemblage par vis de l'élément de répartition de charge (7) avec des brides supérieures (89) des jambes de fondation (9), et
les jambes de fondation (9) s'étendant vers l'extérieur en faisant un angle compris entre 5° et 30° par rapport à la verticale.

2. Eolienne en mer selon la revendication 1, **caractérisée en ce que** six jambes de fondation (9) sont prévues.

3. Eolienne en mer selon l'une des revendications précédentes, **caractérisée en ce que** les jambes de fondation (9) sont reliées entre elles par des tubes de renforcement (43) s'étendant horizontalement.

4. Eolienne en mer selon l'une des revendications précédentes, **caractérisée en ce que** les jambes de fondation (9) sont conçues comme guide pour des tubes de fonçage à enfoncer dans le fond de la mer (17).

5. Eolienne en mer selon la revendication 4, **caractérisée en ce que** les jambes de fondation (9) sont pourvues de plaques d'assise (13) reposant sur le fond de la mer.

6. Eolienne en mer selon l'une des revendications 1 à 4, **caractérisée en ce que** les jambes de fondation (9) sont pourvues de ventouses (47) agissant sur le fond de la mer.

7. Eolienne en mer selon l'une des revendications précédentes, **caractérisée en ce qu'**il est prévu des flotteurs permettant le transport flottant de la fondation (10) préassemblée.

8. Eolienne en mer selon l'une des revendications précédentes, **caractérisée en ce que** l'élément de répartition de charge (7) est disposé au-dessus des plus hautes vagues possibles.

9. Eolienne en mer selon l'une des revendications précédentes, **caractérisée par** un dispositif de levage (71) monté sur l'élément de répartition de charge (7) ou dans la partie supérieure des jambes de fondation (9) et agissant sur une plateforme de levage (69).
